# EUROPÄISCHE PATENTSCHRIFT

(11) **EP 4 211 373 B1**
(45) Veröffentlichungstag und Bekanntmachung des Hinweises auf die Patenterteilung: **04.06.2025**
(21) Anmeldenummer: 20797661.4
(22) Anmeldetag: 11.09.2020
(51) Int. Cl.: F16J 9/20, F16J 9/14, F16J 9/08

(54) **KOLBENRING**
PISTON RING
SEGMENT DE PISTON

(43) Veröffentlichungstag der Anmeldung: 19.07.2023
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2020/000205
(87) Internationale Veröffentlichungsnummer: WO 2022/053087

(56) Entgegenhaltungen:
- ES-A1- 2 079 991
- FR-A- 635 824
- JP-U- H0 540 650
- US-A- 4 123 072
- US-A- 4 138 125

## Beschreibung

Die Erfindung betrifft einen dichtenden Kolbenring mit besonders hoher Dichtungswirkung.

Der Stand der Technik beschreibt eine Vielzahl an verschiedenen Kolbenringen. Kolbenringe werden im Maschinenbau und in der Fahrzeugtechnik, insbesondere bei Motoren, Hydraulikzylindern und vielen weiteren Anwendungsbereichen eingesetzt. Grundlegend haben Kolbenringe die Funktion, den Bewegungsspalt zwischen Zylinderbohrung und der Mantelfläche des Kolbens gegenüber flüssigen und gasförmigen Druckmedien abzudichten. Hierfür werden nach dem Stand der Technik insbesondere geteilte Kolbenringe eingesetzt. Die Unterbrechung des Kolbenrings am Umfang wird auch als Ringspalt bezeichnet, Kolbenringe werden in der Regel federnd ausgebildet, um sich einer Zylinderbohrung anzupassen. Gefertigt werden Kolbenringe in einer aufgefederten ovalen Form. Ihre vorgesehene runde und sich an die Zylinderwandung anlegende Form erhalten die Ringe im eingebauten Zustand und weisen dann eine gewisse Vorspannung auf. Da sich im eingebauten Zustand der Ringspalt nicht vollständig schließt um thermischen Längungen ausgleichen zu können, besteht immer eine gewisse Leckage. Es kommt zu einem Druckverlust und einem Überströmen des Mediums. Da die Dichtungsfunktion des Kolbenrings von vielen Faktoren abhängt, gibt es hier weiterhin großen Optimierungsbedarf.

Zum einen bilden sich die Dichtflächen an der Gleitfläche, die an der Mantelfläche der Zylinderbohrung entsteht und an einer Schulterfläche der Ringnut des Kolbens aus. Daher ist die Flächenpressung der Dichtungsfunktion vom Druck des Mediums und von der Vorspannkraft des Dichtrings abhängig. Letztere Abhängigkeit ist eine konstante Größe, womit nur der Druck des Mediums dynamisch wirkt.

Ferner ist es aus dem Stand der Technik dem Grunde nach bekannt, an dem Ringstoß eine Überlappung der beiden sich gegenüberliegenden Kolbenringenden vorzusehen, um den offenen Querschnitt und damit den Druckverlust sowie den Medienübertritt zu reduzieren. Nachteilig ist hierbei, dass eine für viele Anwendungen zu geringe Dichtwirkung erzielt wird sowie dass sich die verbleibende Leckage mit zunehmenden Verschleiß vergrößert, ES2079991 A1 offenbart einen Kolbenring gemäß dem Oberbegriff des Anspruchs 1.

Die Aufgabe der Erfindung ist es, einen dichtenden Kolbenring mit hoher Dichtwirkung bereitzustellen, der für eine breite Anwendung, insbesondere für hydraulische und pneumatische Anwendung sowie für Anwendungen bei Verbrennungsprozessen wie Verbrennungsmotoren geeignet ist und der eine hohe Verschleißstabilität aufweist.

Die Aufgabe wird durch die im Patentanspruch 1 aufgeführten Merkmale gelöst.

Bevorzugte Weiterbildungen ergeben sich aus den Unteransprüchen.

Bei dem erfindungsgemäßen Kolbenring handelt es sich um ein im Wesentlichen rotationssymmetrisches Teil, das auf dem Umfang eine Unterbrechung aufweist und somit einen Ringkörper und einen Ringstoß aufweist.

Der Ringkörper weist eine Ringkörperoberfläche und ein erstes und zweites Ringkörperende auf.

Die Ringkörperoberfläche weist insbesondere eine radiale Ringfläche sowie eine geneigte Ringfläche auf.

Die radiale Ringfläche ist als eine axial zu einer zylindrischen Innenmantelfläche eines Zylinders verschiebliche Gleitkontaktfläche ausgebildet. Die radiale Ringfläche steht somit in an sich bekannter Weise bei einer bestimmungsgemäßen Verwendung des erfindungsgemäßen Kolbens in einem Berührungskontakt zur Zylinderinnenwandung, wobei der Berührungskontakt bei einer Bewegung des Kolbens relativ zu dem Zylinder als Gleitkontakt vorliegt.

Zudem weist die Ringkörperoberfläche eine geneigte Ringfläche auf, die als Anlagefläche zu einer geneigten Ringnutfläche einer Außenringnut eines Kolbens ausgebildet ist.

Die Ausbildung der geneigten Ringfläche, die bei bestimmungsgemäßer Verwendung an einer korrespondierend ausgebildeten geneigten seitlichen Ringfläche einer umlaufenden Ringnut im Kolben eingreift, begünstigt die dynamische Aufweitung des Kolbenrings. Diese erfolgt über die schräg angreifende Kraft der geneigten Ringfläche. So führt die axial wirkende Kraft, resultierend aus der Drucklast des Druckmediums, zu einer schräg wirkenden Anpresskraft an der schrägen Fläche der Kolbennut. Zusätzlich führt die Keilwirkung an der schrägen Ringfläche zu einer radialen Aufweitung des Kolbenrings und zu einer Kraftwirkung auf die Flächenpressung zwischen der radialen Ringfläche und der Innenmantelfläche des Zylinders. Das wiederum sorgt für eine erhöhte Dichtwirkung. Zugleich wird bei einer arbeitsdruckfreien Rückbewegung des Kolbens die Flächenpressung auf die auf der Federwirkung beruhende Flächenpressung reduziert und so der Verschleiß reduziert.

Zudem wird durch die geneigte Ringfläche bei einem Verschließ an der radialen Ringfläche oder an der Zylinderinnenwandung eine selbsttätige Nachstellung des Kolbenrings unterstützt.

Erfindungsgemäß sind die Ringkörperenden an dem Ringstoß einander gegenüberliegend angeordnet. Sie bilden so den Ringstoß aus.

Das erste Ringkörperende und das zweite Ringkörperende sind erfindungsgemäß zueinander komplementär ausgebildet. Konkret weist hierfür das erste Ringkörperende einen Auskragungsabschnitt und das zweite Ringkörperende einen Basisabschnitt auf.

Das erste Ringkörperende weist den Auskragungsabschnitt mit einem Auskragungskonturquerschnitt auf. Der Auskragungskonturquerschnitt wird durch die Form der Auskragung bestimmt und bezeichnet die Kontur des Auskragungsabschnitts in einer zur Hauptlängsachse parallelen radialen Schnittebene. Die Auskragungskontur wird somit durch einen physischen Abschnitt des Kolbenrings gebildet.

Das zweite Ringköperende weist einen Basisabschnitt mit einer Basisabschnittskontur auf, wobei der Basisabschnitt zugleich eine Aufnahmekontur mit einem Aufnahmekonturquerschnitt ausbildet. Die Basisabschnittskontur wird durch einen physischen Abschnitt des Kolbenrings gebildet, während es sich bei der Aufnahmekontur um einen Freiraum handelt. Der Aufnahmekonturquerschnitt wird durch den von der Basisabschnittskontur nicht ausgefüllten Raum bestimmt, wobei es sich hierbei ebenfalls um eine Kontur in der zur Hauptlängsachse parallelen radialen Schnittebene handelt. Es handelt sich um die gleiche Schnittebene wie bei dem Auskragungsabschnittkonturquerschnitt.

Zudem greift erfindungsgemäß der Auskragungsabschnitt in die Aufnahmekontur ein. Hierbei stimmen der Aufnahmekonturquerschnitt und der Auskragungskonturquerschnitt überein. Der Auskragungskonturquerschnitt als physische Kategorie füllt den Aufnahmekonturquerschnitt als einen Freiraum aus.

Erfindungsgemäß liegen sich eine Auskragungsabschnittstrennfläche des Auskragungsabschnitts und eine Basisabschnittstrennfläche des Basisabschnitts in einem flächigen und dichtenden Berührungskontakt gegenüber und bilden eine Trennebene aus. Die Auskragungsabschnittstrennfläche und die Basisabschnittstrennfläche werden nachfolgend zusammengefasst auch als die Trennflächen bezeichnet.

Die Trennebene weist gegenüber der geneigten Ringfläche eine entgegengesetzte Neigung auf. Als entgegengesetzte Neigung ist zu verstehen, dass sowohl die geneigte Ringfläche als auch die Trennebene jeweils eine Neigung relativ zu einer Hauptplanebene des Kolbenrings aufweisen, wobei diese Neigung jeweils zu einer anderen Seite der Hauptplanebene besteht.

Die Trennebene ist erfindungsgemäß weiter dadurch gekennzeichnet, dass sie die radiale Ringfläche schneidet und an einer Schnittlinie der Trennebene mit der radialen Ringfläche eine Außentrennlinie ausbildet.

Zudem schneidet die Trennebene auch die geneigte Ringfläche und bildet an einer Schnittlinie der Trennebene mit der geneigten Ringfläche eine Innentrennlinie aus.

Die Außentrennlinie und die Innentrennlinie werden nachfolgend zusammengefasst auch als die Trennlinien bezeichnet.

Die beiden Trennlinien begrenzen zugleich die beiden Trennflächen. Hierbei handelt es sich um die radialen Begrenzungen der beiden Trennflächen.

Der erfindungsgemäße Kolbenring ist dadurch gekennzeichnet, dass
mindestens eine der beiden Trennlinien einen zu dem Ringkörper konzentrischen Krümmungsradius aufweist.

Es wurde damit überraschend eine Lösung gefunden, die zuverlässig eine nahezu vollständige Dichtheit gegenüber fluidischen und gasförmigen Druckmedien bereitstellt, indem sich die Ringkörperenden durch die Neigungen der geneigten Ringfläche und der Trennebene sowie durch die konzentrische Trennlinienausbildung sowohl axial, radial als auch tangential stets selbsttätig so zueinander ausrichten, dass sich ein dichtender flächiger Berührungskontakt an den Trennflächen ausbildet.

Die so ausgebildeten, ineinandergreifenden Ringkörperenden weisen eine sehr genaue Dichtgeometrie auf, die auch bei einer variablen Umfangsdehnung und dem resultierenden veränderlichen Ringspalt eine dichtende Überlappung aufweisen. Das resultiert zudem daraus, dass mindestens eine Trennlinie, vorzugsweise beide Trennlinien, einen konzentrischen Krümmungsradius aufweisen. So kann sich der Kolbenring in Umfangsrichtung jederzeit aufweiten oder zusammenziehen und die Abdichtung über die Trennfläche bleibt erhalten. Die Ausdehnung oder das Zusammenziehen über dem Umfang kann aus einer welligen Form der Innenmantelfläche des Zylinders oder aus einer temperaturbedingten Aufweitung oder Schrumpfung oder aus einem Verschleiß resultieren.

Vorteilhaft ist der erfindungsgemäße Kolbenring in der Lage, diese Faktoren zu kompensieren und zugleich seine besonders hohe Dichtigkeit aufrecht zu erhalten.

Zusätzlich kann der Auskragungsabschnitt jederzeit radial und in Umfangsrichtung auf der Trennfläche zum Basisabschnitt gleiten. Dadurch ist jederzeit ein Verschleißausgleich gewährleistet, was zu einer beständigen Dichtungsfunktion führt.

Durch die geneigte Ringfläche weist der erfindungsgemäße Kolbenring vorteilhaft eine selbstzentrierende Wirkung auf, die eine konzentrische Ausrichtung des Kolbenrings zu einem Kolben unterstützt,

Weiterhin ist es vorteilhaft, dass der Kolbenring vorzugsweise metallisch ausgebildet werden kann und somit zugleich hohen Temperaturbeanspruchungen entsprechen kann.

Vorteilhaft kann der erfindungsgemäße Kolbenring somit insbesondere in Verbrennungsmotoren, aber auch in hydraulischen oder pneumatischen Arbeitszylindern oder Dämpfungszylindern sowie in allen sonstigen Anwendungen eingesetzt werden, in denen eine hohe Dichtigkeit benötigt wird oder besonders vorteilhaft ist.

Nach einer ersten vorteilhaften Weiterbildung weisen sowohl die Außentrennlinie als auch die Innentrennlinie einen zu dem Ringkörper konzentrischen Krümmungsradius auf. Zudem weisen damit beide Trennlinien einen zueinander konzentrischen und somit gleichen Krümmungsradius auf.

Diese Weiterbildung bewirkt besonders vorteilhaft, dass sowohl an der radialen Ringfläche, die im dichtenden Gleitkontakt zur Zylinderinnenmantelfläche steht, als auch an der geneigten Ringfläche, die im dichtenden Berührungskontakt zu der Seitenfläche der Ringnut des Kolbens steht, jeweils alle beteiligten Dichtflächen aufeinandertreffen und somit eine besonderes hohe Dichtigkeit bereitstellen.

Zudem wird vorteilhaft ermöglicht, dass eine Umfangsveränderung des Kolbenrings keinen Einfluss auf die Dichtigkeit hat, das sich die Auskragungsabschnittstrennfläche und die Basisabschnittstrennfläche tangential, also entlang des Krümmungsradius zueinander verschieben können und hierbei den flächigen dichtenden Berührungskontakt aufrecht erhalten können.

Nach einer nächsten vorteilhaften Weiterbildung sind die Trennflächen der Ringkörperenden als Kegelstumpfmantelflächen ausgebildet.

Dabei liegen sich die als Kegelstumpfmantelfläche ausgebildete Auskragungsabschnittstrennfläche und die als Kegelstumpfmantelfläche ausgebildete Basisabschnittstrennfläche gegenüber, wobei es sich bei der Auskragungsabschnittstrennfläche um eine konkave Innenkegelstumpfmantelfläche und bei der Basisabschnittstrennfläche um eine konvexe Außenkegelstumpfmantelfläche handelt. Beide einander gegenüberliegende Kegelstumpfmantelflächen weisen im Übrigen die gleiche Geometrie auf und sind somit sowohl längs als auch quer zueinander verschieblich und gewährleisten damit steht seine besonders hohe Dichtigkeit.

Aufgrund dieser Form der Trennflächen bleibt die Dichtwirkung auch bei Umfangsänderungen oder bei einem Verschleiß erhalten. Die entgegengesetzte Neigung zur geneigten Ringnutfläche der Außenringnut verstärkt zudem die dichtende Flächenpressung aufgrund der radialen Kraftwirkung.

Nach einer nächsten vorteilhaften Weiterbildung ist der Aufnahmekonturquerschnitt als ein Dreieck ausgebildet.

Vorzugsweise bildet dieses die Form eines gleichschenkligen Dreiecks. Hierbei liegen die Basisseite an der Innenmantelfläche des Zylinders und der erste Schenkel in der Aufnahmekontur an dem Basisabschnitt an. Der zweite Schenkel entspricht der geneigten Ringfläche und liegt an der Seitenwandung der Ringnut des Kolbens an. Entsprechendes gilt auch dann, wenn es sich nicht um ein gleich - schenkliges Dreieck handelt.

Die dreieckige Kontur des Aufnahmekonturquerschnitts ermöglicht einen insbesondere verschließbedingten Ausgleich der Lagebeziehungen zwischen Basisabschnitt, Auskragungsabschnitt und Innenmantelfläche des Zylinders unter Aufrechterhaltung der flächigen dichtenden Berührungskontakte und somit der Dichtwirkung. Die genannten Komponenten richten sich somit selbsttätig zueinander aus und bewirken somit die verschließunabhängige Dichtigkeit.

In einer nächsten vorteilhaften Weiterbildung sind die Trennflächen als Drahterodierflächen ausgebildet. Durch dieses präzise Fertigungsverfahren werden Oberflächen mit einer hohe Überdeckungsgenauigkeit der Auskragungsabschnittstrennfläche und der Basistrennfläche erhalten. Ein Leckstrom über Spalten zwischen den Trennflächen, wie diese bei anderen Herstellungsverfahren möglich sein kann, wird hiermit vorteilhaft minimiert bis gänzlich ausgeschlossen. Eine zuverlässige Dichtwirkung ist die Folge.

Erfindungsgemäß weist der Ringkörper eine weitere geneigte Ringfläche auf, wobei die weitere geneigte Ringfläche entgegengesetzt zu der geneigten Ringfläche geneigt ist. Bevorzugt weist der Kolbenring somit einen trapezförmigen Querschnitt auf.

Diese Weiterbildung weist besondere Vorteile insbesondere bei doppelwirkenden Zylindern auf. Hier wirkt das Druckmedium in alternierender axialer Richtung auf den Kolben ein. Damit die gleiche Wirkungsweise in beiden Belastungsfällen erreicht werden kann, liegen die beiden geneigten Ringflächen des Kolbenrings in axialer Richtung gegenüber und sind gegensinnig geneigt.

Erfindungsgemäß weist das erste Ringkörperende einen weiteren Auskragungsabschnitt mit einem weiteren Auskragungskonturquerschnitt auf. Zudem weist der Basisabschnitt eine weitere Aufnahmekontur mit einem weiteren Aufnahmekonturquerschnitt auf. Weiterhin greift der weitere Auskragungsabschnitt in die weitere Aufnahmekontur ein und der weitere Aufnahmekonturquerschnitt und der weitere Auskragungskonturquerschnitt stimmen überein. Demzufolge liegen sich eine weitere Auskragungsabschnittstrennfläche des weiteren Auskragungsabschnitts und eine weitere Basisabschnittstrennfläche des Basisabschnitts in einem flächigen und dichtenden Berührungskontakt gegenüber und bilden eine weitere Trennebene aus. Auch weist die weitere Trennebene gegenüber der weiteren geneigten Ringfläche eine entgegengesetzte Neigung auf, wobei die weitere Trennebene die radiale Ringfläche schneidet und an einer Schnittlinie der weiteren Trennebene mit der radialen Ringfläche eine weitere Außentrennlinie ausbildet. Zudem schneidet die weitere Trennebene die weitere geneigte Ringfläche und bildet an einer Schnittlinie der weiteren Trennebene mit der weiteren geneigten Ringfläche eine weitere Innentrennlinie aus, wobei diese die weiteren Trennflächen begrenzen. Zudem weisen die weiteren Trennlinien einen zueinander und zu dem Ringkörper konzentrischen Krümmungsradius auf.

Diese Weiterbildung des erfindungsgemäßen Kolbenrings stellt eine Lösung mit besonderen Vorteilen für einen doppelwirkenden Zylinder bereit. So wird die Kolbenringgeometrie an der axial senkrechten planaren Fläche des Kolbenrings -auch bezeichnet als die Hauptplanebene - gespiegelt und der Kolbenring weist nun zwei sich gegenüberliegende, wechselseitig geneigte Ringflächen auf. Zudem spiegelt sich in der Hauptplanebene die Geometrie der Ringkörperenden. So ist die Keilwirkung, die auf den Kolbenring in distaler radialer Richtung wirkt und ihn über den Umfang dehnt, auch bei einer alternierenden Kolbenbewegung in beiden Kolbenbewegungsrichtungen gegeben. Der Kolbenring wird sowohl bei einer Einfahr- als auch bei einer Ausfahrbewegung des Kolbens mit seiner radialen Ringfläche an die Innenmantelfläche des Zylinders gedrückt.

Entsprechend einer weiteren vorteilhaften Weiterbildung weist der Kolbenring mindestens eine Schwächungsausnehmung auf. Vorzugsweise handelt es sich um mehrere Schwächungsausnehmungen, die in einem gleichmäßigen Winkelabstand zueinander und zu dem Ringstoß über den Umfang verteilt angeordnet sind.

Hierdurch werden die federkraftbedingten Anpresskräfte an eine Innenmantelfläche eines Zylinders über den Umfang verteilt gleichmäßig reduziert und die freie Beweglichkeit und selbstjustierende Wirkung zwischen dem Auskragungsabschnitt und dem Basisabschnitt unterstützt. Zugleich bleiben aber die vorteilhaften durch den Betriebsdruck eines Druckmittels bewirkten Anpresskräfte unbeeinträchtigt erhalten. Besonders vorteilhaft kann somit ein Kolbenring bei gleicher Ausgangsgeometrie und gleichem Material die federkraftbedingte Anpresskraft in einfacher Weise an die jeweiligen Anwendungsanforderungen angepasst werden.

Eine nicht erfindungsgemäße Kolbenringanordnung weist einen ersten und einen zweiten Kolbenring auf, wobei es sich bei diesen beiden Kolbenringen um nicht erfindungsgemäße Kolbenringe handelt.

Hierbei weisen die Kolbenringe jeweils eine axiale Ringfläche auf. Zudem sind die Kolbenringe parallel angeordnet, wobei die axiale Ringfläche des ersten Kolbenrings und die axiale Ringfläche des zweiten Kolbenrings in einem Berührungskontakt aneinander anliegen. Die beiden Kolbenringe sind somit entweder gedreht oder gespiegelt zueinander in derselben Ringnut des Kolbens angeordnet. Die Ringnut hat einen trapezförmigen, sich radial aufweitenden Querschnitt und weist hierfür zwei, vorzugsweise symmetrisch, geneigte Nutenseitenflächen auf.

Diese nicht erfindungsgemäße Anordnung stellt eine weitere Lösung mit besonderen Vorteilen für einen doppeltwirkenden Zylinders dar. Es werden zwei zueinander gespiegelte Kolbenringe aufeinandergelegt eingesetzt. Das ermöglicht es, gegen ein Druckmedium, das alternierend von zwei axial gegenüberliegenden Seiten angreift, gleichwirkend abzudichten. Diese Variante hat zudem den Vorteil, dass ein Ausgleich verschiedener Toleranzen der Zylinder-Kolben-Anordnung durch die zueinander schwimmende Einbauposition der Ringe wesentlich verbessert wird. Zudem besteht der technologische Vorteil und Kostenvorteil, dass der erste und der zweite Kolbenring vorzugsweise identisch sind und somit lediglich ein Kolbenringtyp in zwei Exemplaren verwendet werden kann. Durch den trapezförmigen Querschnitt der Ringnut in dem Zusammenwirken mit den geneigten Ringflächen der Kolbenringe werden diese zudem vorteilhaft zueinander selbsttätig zentriert.

Die Erfindung wird als Ausführungsbeispiel anhand von
Fig. 1 Schrägansicht eines nicht erfindungsgemäßen Kolbenrings
Fig. 2 Draufsicht eines nicht erfindungsgemäßen Kolbenrings nicht erfindungsgemäßen
Fig. 3 Querschnittsansicht eines Kolbenrings
Fig. 4 Detailausschnitt eines nicht erfindungsgemäßen Kolbenrings an den Ringkörperenden als Schrägansicht
Fig. 5 Schnittansicht und schematische Darstellung der Ringkörperenden
Fig. 6 Querschnittsansicht eines nicht erfindungsgemäßen Kolbenrings mit zwei geneigten Ringflächen
Fig. 7 Querschnittsansicht eines erfindungsgemäßen Kolbenrings mit zwei geneigten Ringflächen und zwei Auskragungsabschnitten
Fig. 8 Schematische Ansicht eines erfindungsgemäßen Kolbenrings mit zwei geneigten Ringflächen und zwei Auskragungsabschnitten erfindungsgemäßen
Fig. 9 Schematische Ansicht des Basisabschnitts eines Kolbenrings mit zwei geneigten Ringflächen und zwei Auskragungsabschnitten
Fig. 10 Draufsicht eines Kolbenrings mit Schwächungsausnehmungen nicht erfindungsgemäßen
Fig. 11 Querschnittsansicht einer Kolbenringanordnung näher erläutert.

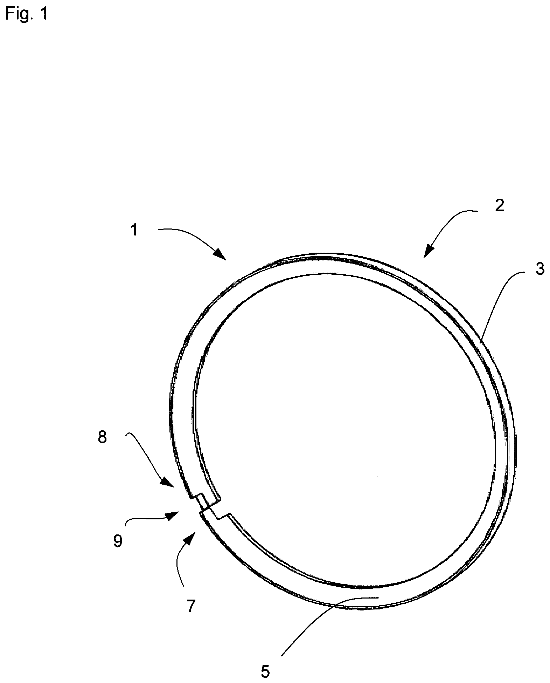

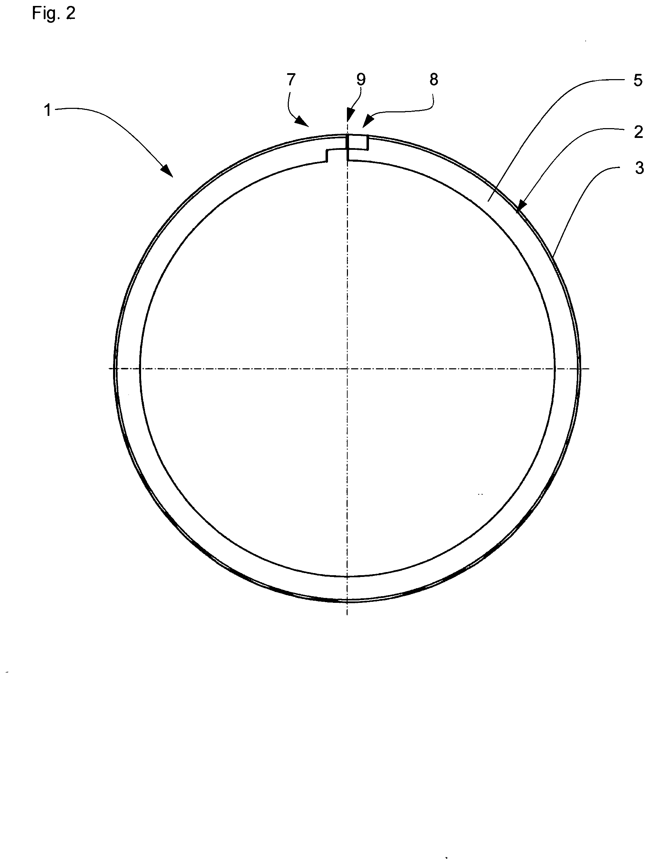

Die Figur 1 zeigt den Kolbenring für eine erste Übersicht in einer Schrägdarstellung; die Figur 2 zeigt den Kolbenring in einer Draufsicht entlang der Hauptlängsachse, die der Bewegungsachse des Kolbens entspricht. Dargestellt sind in den beiden Figuren 1 und 2 der Ringkörper 1 mit der Ringkörperoberfläche 2, die die radialen Ringfläche 3 und die geneigte Ringfläche 5 aufweist. An einer Stelle ist der Ringkörper 1 unterbrochen. Hier stehen sich ein erstes Ringkörperende 7 und ein zweites Ringkörperende 8 gegenüber. Bei der Unterbrechung dazwischen handelt es sich um den Ringstoß 9.

Der Ring ist in der nicht montierten, entspannten Fertigungslage, auch als Entspannungslage bezeichnet, dargestellt. In diesem Ausführungsbeispiel überragen sich die Ringkörperenden 7, 8 in der Entspannungslage nicht. In einer alternativen Ausführung - hier nicht dargestellt - besteht ein teilweises Hineinragen in das jeweils andere Ringkörperende 7, 8 bereits in der Entspannungslage.

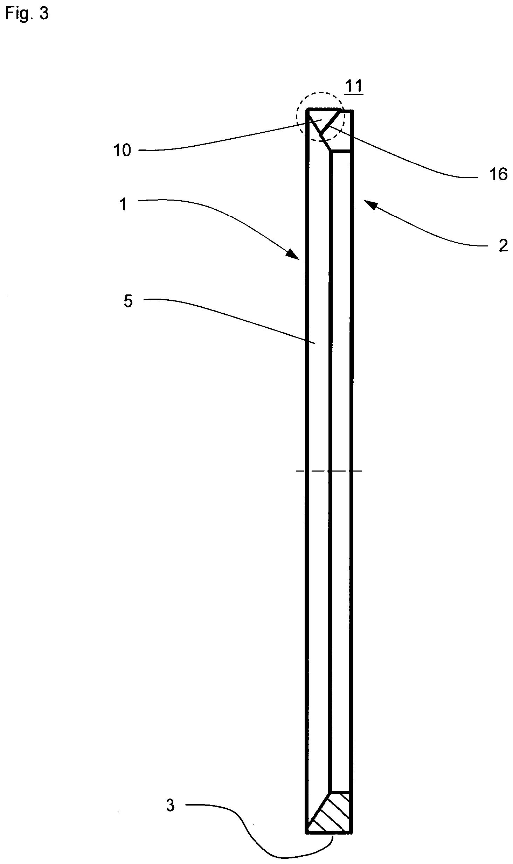

Die Figur 3 zeigt den Querschnitt des Ringkörpers 1 durch den Ringstoß 9. Die Ringkörperoberfläche 2 bezeichnet die Oberfläche des gesamten Kolbenrings. Bei der Außenmantelfläche des Ringkörpers 1 handelt es sich um die radiale Ringfläche 3. Auf einer axialen Seite besitzt der Ringkörper 1 die geneigte Ringfläche 5. Hiermit greift der Kolbenring in die passende Gegenkontur einer umlaufenden Ringnut eines Kolbens ein. Ferner ist der Auskragungsabschnitt 10 mit dem Auskragungskonturquerschnitt 11 - hervorgehoben durch die gestrichelte Einkreisung - sowie die Auskragungsabschnittstrennfläche 16 dargestellt.

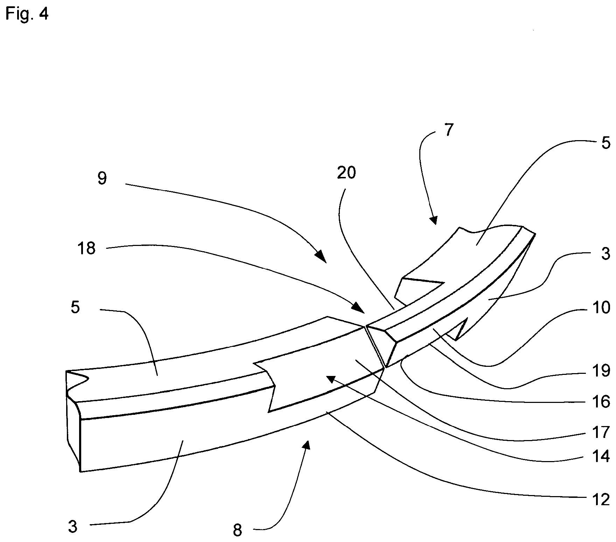

Die Figur 4 zeigt den Ausschnitt des Kolbenrings an dem Ringstoß 9 und an den Ringkörperenden 7, 8 als eine Schrägansicht.

Dargestellt ist die nicht eingebaute Form des Kolbenrings in der Entspannungslage. Die Ansicht zeigt dabei auf die Außenseite des Kolbenrings in Richtung der radialen Ringfläche 3. Geneigt dazu befindet sich umlaufend die geneigte Ringfläche 5. Am ersten Ringkörperende 7 befindet sich der Auskragungsabschnitt 10. Dieser weist entgegen der Ansichtsrichtung von Fig. 3 die Auskragungsabschnittstrennfläche 16 auf.

Das korrespondierende Gegenstück am zweiten Ringkörperende 8 bildet der Basisabschnitt 12. Die Aufnahmekontur 14 wird durch die Trennebene 18 definiert; sie bildet die Basisabschnittstrennfläche aus und nimmt den Auskragungsabschnitt 10 flächig auf. In der gespannten Einbaulage liegt der Auskragungsabschnitt 10 mit der Auskragungsabschnittstrennfläche 16 flächig auf dem Basisabschnitt 12, konkret auf der Basisabschnittstrennfläche 17, flächig auf. Dort wird die Trennebene 18 ausgebildet. Durch den flächigen Kontakt von Auskragungsabschnittstrennfläche 16 und Basisabschnittstrennfläche 17 in der Trennebene 18 wird der an dem Ringstoß 9 unterbrochene Kolbenring wieder abgedichtet.

Die Trennebene 18 besitzt in der Überdeckungszone von Auskragungsabschnittstrennfläche 16 und Basisabschnittstrennfläche 17 im vorliegenden Ausführungsbeispiel die Form eines Ausschnitts einer Kegelstumpfmantelfläche. Es entstehen an der gekrümmten Kante zur geneigten Ringfläche 5 die Innentrennlinie 20 und an der gekrümmten Kante zur radialen Ringfläche 3 die Außentrennlinie 19. Die Trennlinien 19, 20 beschreiben Kreisbögen, die konzentrisch zum Kreismittelpunkt des Ringkörpers angeordnet sind, was ein deckungsgleiches Abgleiten von Auskragungsabschnittstrennfläche 16 und Basisabschnittstrennfläche 17 aufeinander bei einer Umfangsaufweitung oder Umfangsreduzierung des Kolbenrings ermöglicht.

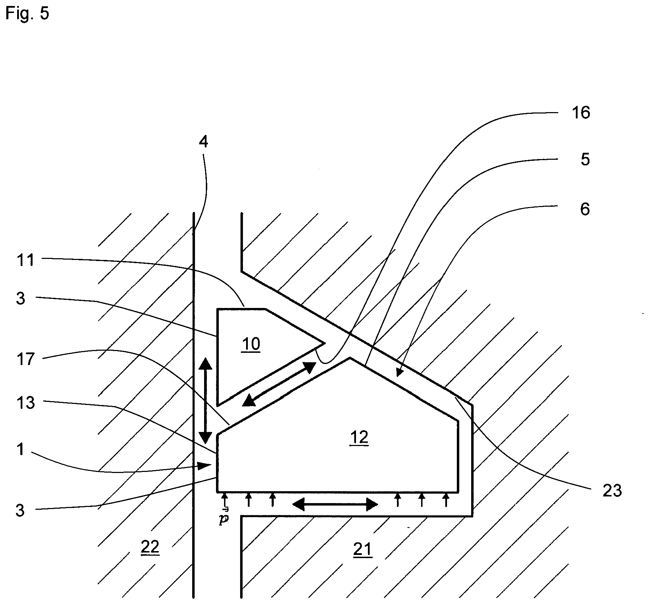

Die Figur 5 zeigt eine schematische Darstellung des Kolbenrings im eingebauten Zustand. Die einzelnen Spalten zwischen den verschiedenen Komponenten sind zur besseren Ansicht stark vergrößert und nicht maßstabsgerecht dargestellt. Die Fig. 5 soll als Schema die Lage- und Bewegungsbeziehungen der Komponenten sowie die wirkenden Kräfte verdeutlichen.

So ist gemäß Fig. 5 der Ringkörper 1 in einer Ringnut 6 eines Kolbens 21 verbaut. Diese ist mit einer geneigten Ringnutfläche 23 ausgebildet. Bewegt sich der Kolben im Zylinder, gleitet der Kolbenring an der Innenmantelfläche 4 des Zylinders 22 mit der radialen Ringfläche 3 axial ab. Das Druckmedium wirkt mit dem Druck p auf die planare, axiale Ringfläche des Kolbenrings (ohne Bezugszeichen). Der Kolbenring wird in der Ringnut 6 des Kolbens 21 gegen die geneigte Ringnutfläche 23 gedrückt und gleitet mit seiner geneigten Ringfläche 5 darauf ab. Die Neigung ist derart ausgelegt, dass diese zum einen eine Dichtwirkung gegenüber dem Druckmedium bereitstellt und zugleich auch durch die Keilwirkung eine radiale Kraft auf den Kolbenring bewirkt und diesen somit aufweitet. Das wiederum sorgt für ein Anpressen der radialen Ringfläche 3 an die Innenmantelfläche 4 des Zylinders 22, was zu einer Erhöhung der Dichtwirkung führt. Zusätzlich kann der Auskragungskonturquerschnitt 11 mit der Auskragungsabschnittstrennfläche 16 auf der Basisabschnittstrennfläche 17 der Basisabschnittskontur 13 sowohl quer - wie durch den Doppelpfeil zwischen den Trennflächen 16, 17 dargestellt - als auch längs, also entlang dem Umfang, abgleiten. Zugleich sind der Auskragungsabschnitt 10 und der Basisabschnitt 12 axial entlang der radialen Ringfläche 3 und der Innenmantelfläche 4 zueinander verschieblich, so dass der Spalt zwischen den Trennflächen 16, 17 auch bei einem Verschleiß stets wieder geschlossen werden kann.

Dieses Abgleiten der Trennflächen 16, 17 quer und längs in Verbindung mit der axialen Verschieblichkeit der Abschnitte 10, 12 ermöglicht den Ausgleich von verschleißbedingten Materialabtragungen am Kolbenring und sichert stets einen flächigen Kontakt und damit eine gleichbleibende Dichtwirkung über die Einsatzdauer.

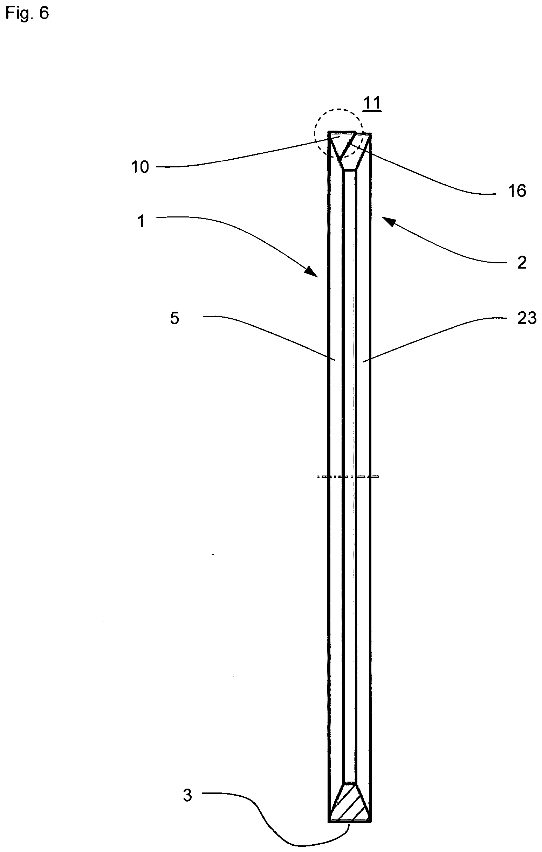

Figur 6 zeigt ein Ausführungsbeispiel, bei dem der Kolbenring eine weitere geneigte Ringfläche 23 aufweist.

Zunächst gelten die Erläuterungen zu Fig. 2 in entsprechender Weise. Zusätzlich liegt hier die weitere geneigte Ringfläche 23 vor. In diesem Ausführungsbeispiel liegen sich die Ringflächen 5, 23 symmetrisch gegenüber.

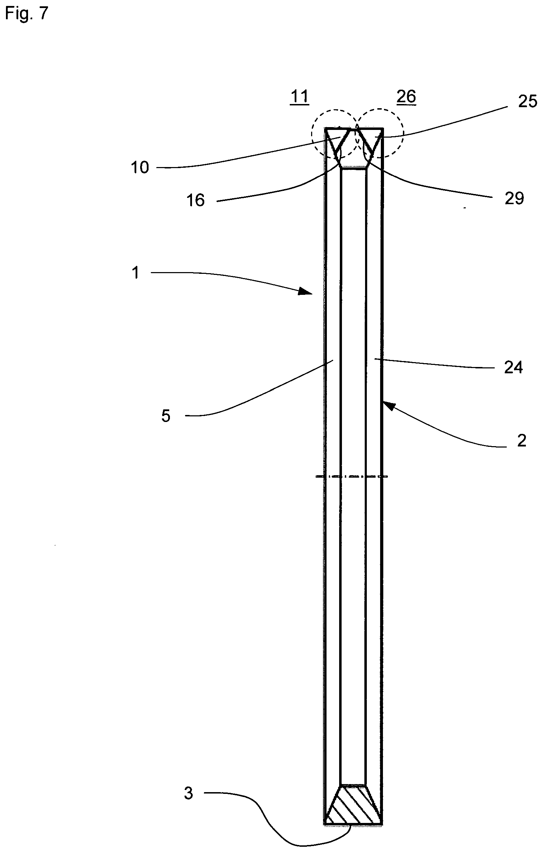

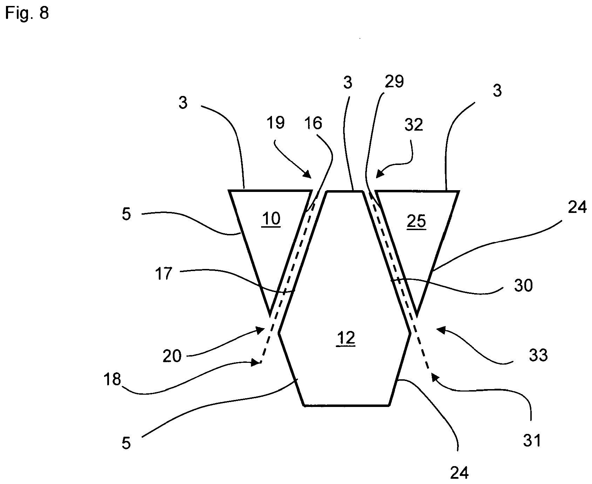

Figur 7 und Figur 8 zeigen ein Ausführungsbeispiel, bei dem der Kolbenring zusätzlich zu der weiteren geneigten Ringfläche 24 einen weiteren Auskragungsabschnitt 25 und eine weitere Auskragungskontur 26 aufweist. Zur besseren Darstellung zeigt Fig. 7 schematisch den im Ausführungsbeispiel symmetrischen Aufbau, wobei hier wie in Fig. 4 die Spalten zwischen den verschiedenen Komponenten zur besseren Ansicht stark vergrößert und nicht maßstabsgerecht dargestellt sind.

Dem Auskragungsabschnitt 10 ist die geneigte Ringfläche 5, die Auskragungsabschnittstrennfläche 16 und gegenüberliegend die Basisabschnittstrennfläche 17 des Basisabschnitts 12 mit der sich dazwischen ausbildenden Trennfläche 18 zugeordnet, welche durch die Innentrennlinie 20 und die Außentrennlinie 19 begrenzt wird.

Dem weiteren Auskragungsabschnitt 25 ist die weitere geneigte Ringfläche 24, die weitere Auskragungsabschnittstrennfläche 29 und dieser gegenüberliegend die weitere Basisabschnittstrennfläche 30 des Basisabschnitts 12 mit der sich dazwischen ausbildenden weiteren Trennfläche 31 zugeordnet, welche durch die weitere Innentrennlinie 33 und die weitere Außentrennlinie 32 begrenzt wird.

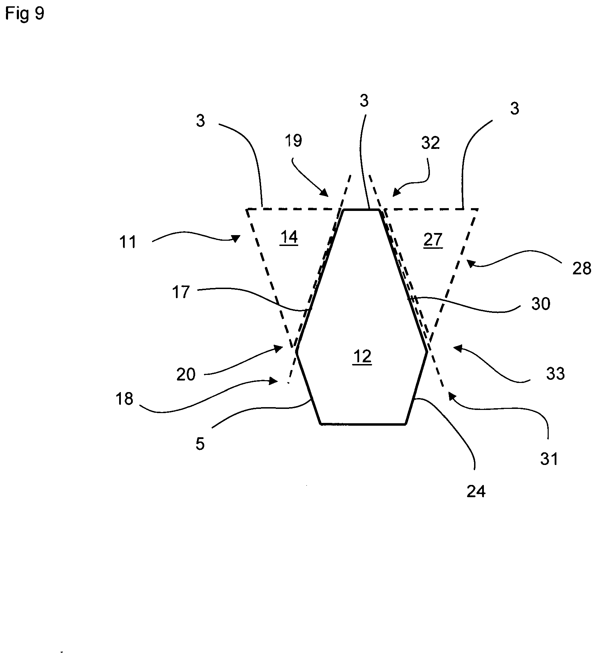

Figur 9 zeigt den Basisabschnitt 12 in einer schematischen Schnittansicht in einer radialen Schnittebene. Fig. 8 stellt insbesondere die Aufnahmekontur 14 mit ihrem Aufnahmekonturquerschnitt 11 sowie die weitere Aufnahmekontur 27 mit deren Aufnahmekonturquerschnitt 28 dar. Im Übrigen gelten die Beschreibungsinhalte und Bezugszeichen zu Fig. 7 in entsprechender Weise. In dem von der weiteren Aufnahmekontur 27 aufgespannten Bauraum ist in einer Spannungslage der weitere Auskragungsabschnitt 25 angeordnet, wie dies Fig. 7 darstellt. Entsprechend ist in dem von der Aufnahmekontur 14 aufgespannten Bauraum in einer Spannungslage der Auskragungsabschnitt 10 angeordnet, wie Fig. 7 ebenfalls zeigt.

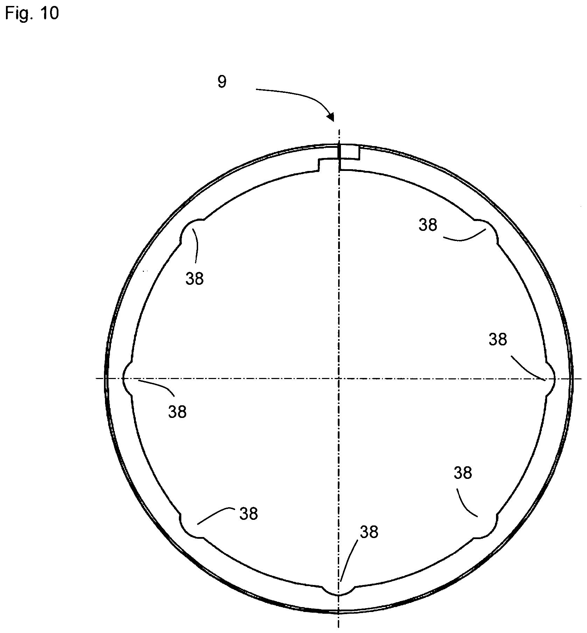

Figur 10 zeigt einen Kolbenring, bei dem der radialen Ringfläche 3 gegenüberliegende Schwächungsausnehmungen 38 angeordnet sind. In dem Ausführungsbeispiel handelt es sich um insgesamt sieben Schwächungsausnehmungen 38, welche in einem Winkel von jeweils 45 Grad zueinander angeordnet sind. Ferner schließen die zu dem Ringstoß 9 benachbarten Schwächungsau snehmungen 38 zu dem Ringstoß 9 jeweils einen Winkel von ebenfalls 45 Grad ein. Durch die Schwächungsausnehmungen 38 und durch deren gleichmäßige Verteilung werden die federkraftbedingten Anpresskräfte an eine Innenmantelfläche 4 eines Zylinders über den Umfang verteilt gleichmäßig reduziert und die freie Beweglichkeit und selbstjustierende Wirkung zwischen dem Auskragungsabschnitt und dem Basisabschnitt unterstützt. Zugleich bleiben aber die vorteilhaften durch den Betriebsdruck eines Druckmittels bewirkten Anpresskräfte unbeeinträchtigt erhalten.

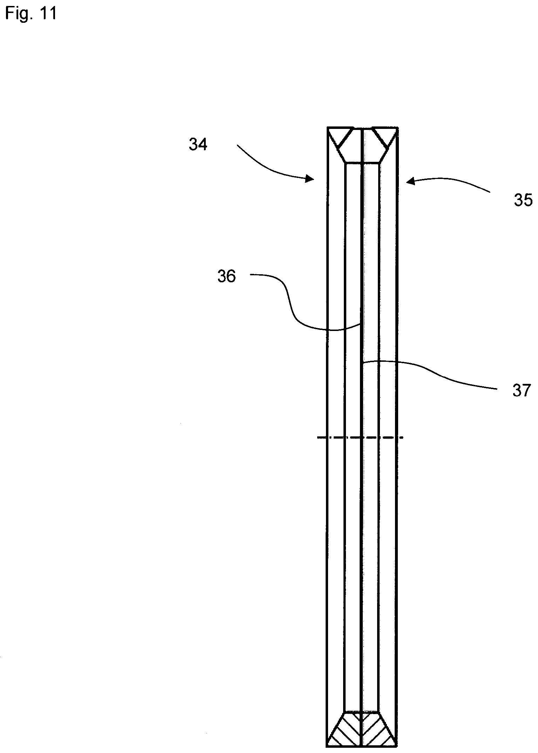

Figur 11 zeigt eine Kolbenringanordnung aufweisend eine ersten Kolbenring 34 und einen zweiten Kolbenring 35. Beide Kolbenringe 34, 35 sind als nicht erfindungsgemäße Kolbenringe ausgebildet. Zusätzlich weisen sie jeweils eine axiale Ringfläche 36, 37 auf. An den axialen Ringflächen 36, 37 liegen die beiden Kolbenringe 34, 35 aneinander an, wobei sie auf diese Weise zueinander schwimmend gelagert sind.

### Verwendete Bezugszeichen

### Verwendete Bezugszeichen

- 1: Ringkörper
- 2: Ringkörperoberfläche
- 3: radiale Ringfläche
- 4: Innenmantelfläche
- 5: geneigte Ringfläche
- 6: Außenringnut eines Kolbens
- 7: erstes Ringkörperende
- 8: zweites Ringkörperende
- 9: Ringstoß
- 10: Auskragungsabschnitt
- 11: Auskragungskonturquerschnitt
- 12: Basisabschnitt
- 13: Basisabschnittskontur
- 14: Aufnahmekontur
- 15: Aufnahmekonturquerschnitt
- 16: Auskragungsabschnittstrennfläche
- 17: Basisabschnittstrennfläche
- 18: Trennebene
- 19: Außentrennlinie
- 20: Innentrennlinie
- 21: Kolben
- 22: Zylinder
- 23: geneigte Ringnutfläche
- 24: weitere geneigte Ringfläche
- 25: weiterer Auskragungsabschnitt
- 26: weiterer Auskragungskonturquerschnitt
- 27: weitere Aufnahmekontur
- 28: weiterer Aufnahmekonturquerschnitt
- 29: weitere Auskragungsabschnittstrennfläche
- 30: weitere Basisabschnittstrennfläche
- 31: weitere Trennebene
- 32: weitere Außentrennlinie
- 33: weitere Innentrennlinie
- 34: erster Kolbenring
- 35: zweiter Kolbenring
- 36: axiale Ringfläche des ersten Kolbenrings
- 37: axiale Ringfläche des zweiten Kolbenrings
- 38: Schwächungsausnehmung

## Patentansprüche

1. Kolbenring,
aufweisend einen Ringkörper (1) und einen Ringstoß (9),
wobei der Ringkörper (1) eine Ringkörperoberfläche (2) aufweist, welche eine radiale Ringfläche (3) und eine geneigte Ringfläche (5) aufweist,
wobei die radiale Ringfläche (3) als axial zu einer zylindrischen Innenmantelfläche (4) eines Zylinders verschiebliche Gleitkontaktfläche ausgebildet ist,
wobei die geneigte Ringfläche (5) als Anlagefläche zur Anlage in einer geneigten Ringnutfläche einer Außenringnut eines Kolbens (6) ausgebildet ist,
wobei der Ringkörper (1) ein erstes (7) und zweites Ringkörperende (8) aufweist,
wobei die Ringkörperenden, die dem Ringstoß (9) gegenüberliegend angeordnet sind, den Ringstoß (9) ausbilden,
wobei das erste Ringkörperende (7) einen Auskragungsabschnitt (10) mit einem Auskragungskonturquerschnitt (11) aufweist,
wobei das zweite Ringkörperende (8) einen Basisabschnitt (12) mit einer Basisabschnittskontur (13) aufweist, wobei der Basisabschnitt (12) eine Aufnahmekontur (14) mit einem Aufnahmekonturquerschnitt (15) ausbildet,
wobei der Auskragungsabschnitt (10) in die Aufnahmekontur (14) eingreift und der Aufnahmekonturquerschnitt (15) und der Auskragungsabschnittsquerschnitt (10) übereinstimmen,
wobei sich eine Auskragungsabschnittstrennfläche (16) des Auskragungsabschnitts (10) und eine Basisabschnittstrennfläche (17) des Basisabschnitts (12) in einem flächigen und dichtenden Berührungskontakt gegenüberliegen und eine Trennebene (18) ausbilden,
wobei die Trennebene (18) gegenüber der geneigten Ringfläche (5) eine entgegengesetzte Neigung aufweist, wobei die Trennebene (18) die radiale Ringfläche (3) schneidet und sich an einer Schnittlinie der Trennebene (18) mit der radialen Ringfläche (3) eine Außentrennlinie (19) ausbildet, wobei die Trennebene (18) die geneigte Ringfläche (5) schneidet und sich an einer Schnittlinie der Trennebene (18) mit der geneigten Ringfläche (3) eine Innentrennlinie (20) ausbildet, wobei die Trennlinien (19, 20) die Trennflächen (16, 17) begrenzen und wobei mindestens eine der Trennlinien (19, 20) einen zudem Ringkörper (1) konzentrischen Krümmungsradius aufweist,
**dadurch gekennzeichnet,**
**dass** der Ringkörper (1) eine weitere geneigte Ringfläche aufweist, wobei die weitere geneigte Ringfläche entgegengesetzt zu der geneigten Ringfläche (5) geneigt ist,
**dass** das erste Ringkörperende (7) einen weiteren Auskragungsabschnitt (25) mit einem weiteren Auskragungskonturquerschnitt (26) aufweist,
**dass** der Basisabschnitt (12) eine weitere Aufnahmekontur (27) mit einem weiteren Aufnahmekonturquerschnitt (28) aufweist,
wobei der weitere Auskragungsabschnitt (25) in die weitere Aufnahmekontur (27) eingreift und der weitere Aufnahmekonturquerschnitt (28) und der weitere Auskragungskonturquerschnitt (26) übereinstimmen,
wobei sich eine weitere Auskragungsabschnittstrennfläche (29) des weiteren Auskragungsabschnitts (25) und eine weitere Basisabschnittstrennfläche (30) des Basisabschnitts (12) in einem flächigen und dichtenden Berührungskontakt gegenüberliegen und eine weitere Trennebene (31) ausbilden, wobei die weitere Trennebene (31) gegenüber der weiteren geneigten (24) Ringfläche eine entgegengesetzte Neigung aufweist,
wobei die weitere Trennebene (31) die radiale Ringfläche (3) schneidet und sich an einer Schnittlinie der weiteren Trennebene (31) mit der radialen Ringfläche (3) eine weitere Außentrennlinie (32) ausbildet,
wobei die weitere Trennebene (31) die weitere geneigte Ringfläche (24) schneidet und sich an einer Schnittlinie der weiteren Trennebene (31) mit der weiteren geneigten Ringfläche (24) eine weitere Innentrennlinie (33) ausbildet,
wobei die weiteren Trennlinien (32, 33) die weiteren Trennflächen (29, 30) begrenzen und
wobei die weiteren Trennlinien (32, 33) einen zueinander und zu dem Ringkörper (1) konzentrischen Krümmungsradius aufweisen.

2. Kolbenring nach Anspruch 1,
**dadurch gekennzeichnet,**
**dass** die Außentrennlinie (19) und die Innentrennlinie (20) einen zu dem Ringkörper (1) und zueinander konzentrischen Krümmungsradius aufweisen.

3. Kolbenring nach einem der vorhergehenden Ansprüche,
**dadurch gekennzeichnet,**
**dass** die Trennflächen als Kegelstumpfmantelteilflächen ausgebildet sind.

4. Kolbenring nach einem der vorhergehenden Ansprüche,
**dadurch gekennzeichnet,**
**dass** der Aufnahmekonturquerschnitt (15) als ein Dreieck ausgebildet ist.

5. Kolbenring nach einem der vorhergehenden Ansprüche,
**dadurch gekennzeichnet,**
**dass** die Trennflächen als Drahterodierflächen ausgebildet sind.

6. Kolbenring nach einem der vorhergehenden Ansprüche,
**dadurch gekennzeichnet,**
**dass** der Ringkörper (1) mindestens eine Schwächungsausnehmung (38) aufweist, die radial innenseitig angeordnet ist.

## Claims

1. A piston ring,
comprising a ring body (1) and a ring joint (9),
wherein the ring body (1) comprises a ring body surface (2) which has a radial ring surface (3) and an inclined ring surface (5),
wherein the radial ring surface (3) is designed as a sliding contact surface axially displaceable relative to a cylindrical inner barrel surface (4) of a cylinder,
wherein the inclined ring surface (5) is designed as a lay-on surface to rest in an inclined ring groove surface of an outer ring groove of a piston (6),
wherein the ring body (1) comprises a first (7) and a second ring body end (8),
wherein the ring body ends, which are arranged opposite at the ring joint (9), form the ring joint (9),
wherein the first ring body end (7) has a projection section (10) with a projection contour cross section (11),
wherein the second ring body end (8) has a base section (12) with a base section contour (13), wherein the base section (12) forms a receiving contour (14) with a receiving contour cross section (15),
wherein the projection section (10) engages in the receiving contour (14), and the receiving contour cross section (15) and the projection section cross section (10) coincide,
wherein a projection section separating surface (16) of the projection section (10) and a base section separating surface (17) of the base section (12) are provided opposite to each other in a full-area and sealing physical contact and form a separating plane (18),
wherein the separating plane (18) has an inverse inclination with respect to the inclined ring surface (5), wherein the separating plane (18) intersects the radial ring surface (3) and an outer separating line (19) is formed at an intersection line of the separating plane (18) with the radial ring surface (3),
wherein the separating plane (18) intersects the inclined ring surface (5) and an inner separating line (20) is formed at an intersection line of the separating plane (18) with the inclined ring surface (5), wherein the separating lines (19, 20) delimit the separating surfaces (16, 17), and
wherein at least one of the separating lines (19, 20) has a concentric curvature radius with respect to the ring body (1),
**characterized in**
**that** the ring body (1) comprises a further inclined ring surface (24), wherein the further inclined ring surface (24) is inclined in the direction opposite to the inclined ring surface (5),
**that** the first ring body end (7) comprises a further projection section (25) with a further projection contour cross section (26),
**that** the base section (12) comprises a further receiving contour (27) with a further receiving contour cross section (28),
wherein the further projection section (25) engages in the further receiving contour (27) and the further receiving contour cross section (28) and the further projection contour cross section (26) coincide,
wherein a further projection section separating surface (29) of the further projection section (25) and a further base section separating surface (30) of the base section (12) are provided opposite to each other in a full-area and sealing physical contact and form a further separating plane (31),
wherein the further separating plane (31) has an inverse inclination with respect to the further inclined ring surface (24),
wherein the further separating plane (31) intersects the radial ring surface (3) and a further outer separating line (32) is formed at an intersection line of the further separating plane (31) with the radial ring surface (3),
wherein the further separating plane (31) intersects the further inclined ring surface (24) and a further inner separating line (33) is formed at an intersection line of the further separating plane (31) with the further inclined ring surface (24),
wherein the further separating lines (32, 33) delimit the further separating surfaces (29,30), and
wherein the further separating lines (32, 33) have a concentric curvature radius with respect to each other and to the ring body (1).

2. The piston ring according to claim 1,
**characterized in**
**that** the outer separating line (19) and the inner separating line (20) have a concentric curvature radius with respect to the ring body (1) and to each other.

3. The piston ring according to one of the preceding claims,
**characterized in**
**that** the separating surfaces are designed as truncated-cone lateral partial surfaces.

4. The piston ring according to one of the preceding claims,
**characterized in**
**that** the receiving contour cross section (15) is designed as a triangle.

5. The piston ring according to one of the preceding claims,
**characterized in**
**that** the separating surfaces are designed as wire erosion surfaces.

6. The piston ring according to one of the preceding claims,
**characterized in**
**that** the ring body (1) has at least one weakening recess (38) which is arranged radially on the inside.

## Revendications

1. Segment de piston,
comprenant un corps annulaire (1) et un joint annulaire (9),
où le corps annulaire (1) présente une surface de corps annulaire (2) qui présente une surface annulaire radiale (3) et une surface annulaire inclinée (5),
où la surface annulaire radiale (3) est réalisée sous forme de surface de contact de glissement déplaçable axialement par rapport à une surface-enveloppe intérieure cylindrique (4) d'un cylindre,
où la surface annulaire inclinée (5) est conçue comme une surface d'appui pour l'appui dans une surface de rainure annulaire inclinée d'une rainure annulaire extérieure d'un piston (6),
où le corps annulaire (1) comprend une première (7) et une deuxième extrémité du corps annulaire (8),
où les extrémités du corps annulaire, qui sont disposées en face du joint annulaire (9), forment le joint annulaire (9),
où la première extrémité du corps annulaire (7) présente une section en saillie (10) avec une section transversale de contour en saillie (11),
où la deuxième extrémité du corps annulaire (8) présente une section de base (12) avec un contour de section de base (13), la section de base (12) formant un contour de logement (14) avec une section transversale de contour de logement (15),
où la section en saillie (10) s'engage dans le contour de logement (14) et la section transversale du contour de logement (15) et la section transversale de la section en saillie (10) coïncident,
où une surface de séparation de section en saillie (16) de la section en saillie (10) et une surface de séparation de section de base (17) de la section de base (12) sont opposées l'une à l'autre dans un contact de surface et d'étanchéité et forment un plan de séparation (18),
le plan de séparation (18) présentant une inclinaison opposée à celle de la surface annulaire inclinée (5), le plan de séparation (18) coupant la surface annulaire radiale (3) et une ligne de séparation extérieure (19) se formant sur une ligne d'intersection du plan de séparation (18) avec la surface annulaire radiale (3), le plan de séparation (18) coupant la surface annulaire inclinée (5) et une ligne de séparation intérieure (20) se formant sur une ligne d'intersection du plan de séparation (18) avec la surface annulaire inclinée (3), les lignes de séparation (19, 20) délimitant les surfaces de séparation (16, 17) et au moins une des lignes de séparation (19, 20) présentant un rayon de courbure concentrique en outre au corps annulaire (1),
est **caractérisé en ce**
**que** le corps annulaire (1) présente une autre surface annulaire inclinée, l'autre surface annulaire inclinée étant inclinée en sens inverse de la surface annulaire inclinée (5), que la première extrémité (7) du corps annulaire présente un autre section en saillie (25) avec une autre section transversale de contour en saillie (26),
**que** la section de base (12) présente un autre contour de logement (27) avec une autre section transversale de contour de logement (28),
l'autre section en saillie (25) s'engageant dans l'autre contour de logement (27) et l'autre section transversale de contour de logement (28) et l'autre section transversale de contour en saillie (26) coïncidant,
une autre surface de séparation de section en saillie (29) de l'autre section en saillie (25) et une autre surface de séparation de section de base (30) de la section de base (12) étant opposées l'une à l'autre dans un contact de surface et d'étanchéité et formant un autre plan de séparation (31),
l'autre plan de séparation (31) présentant une inclinaison opposée à l'autre surface annulaire inclinée (24),
l'autre plan de séparation (31) coupant la surface annulaire radiale (3) et une autre ligne de séparation extérieure (32) se formant sur une ligne d'intersection de l'autre plan de séparation (31) avec la surface annulaire radiale (3),
l'autre plan de séparation (31) coupant l'autre surface annulaire inclinée (24) et une autre ligne de séparation intérieure (33) se formant sur une ligne d'intersection de l'autre plan de séparation (31) avec l'autre surface annulaire inclinée (24),
les autres lignes de séparation (32, 33) délimitant les autres surfaces de séparation (29, 30) et
les autres lignes de séparation (32, 33) présentant un rayon de courbure concentrique entre elles et par rapport au corps annulaire (1).

2. Segment de piston selon la revendication 1
est **caractérisé en ce**
**que** la ligne de séparation extérieure (19) et la ligne de séparation intérieure (20) présentent un rayon de courbure concentrique par rapport au corps annulaire (1) et l'une par rapport à l'autre.

3. Segment de piston suivant une des revendications précédentes
est **caractérisé en ce**
**que** les surfaces de séparation sont réalisées sous forme de surfaces partielles d'enveloppe tronconique.

4. Segment de piston suivant une des revendications précédentes
est caractérisé en ce
en ce que la section transversale du contour de logement (15) est réalisée sous la forme d'un triangle.

5. Segment de piston suivant une des revendications précédentes
est **caractérisé en ce**
**que** les surfaces de séparation sont réalisées sous forme de surfaces d'électroérosion à fil.

6. Segment de piston suivant une des revendications précédentes
est **caractérisé en ce**
**que** le corps annulaire (1) présente au moins un évidement d'affaiblissement (38) qui est disposé radialement à l'intérieur.
